# EUROPEAN PATENT APPLICATION

(11) **EP 2 562 902 A1**
(43) Date of publication of application: **27.02.2013**
(21) Application number: 12180315.9
(22) Date of filing: 13.08.2012
(51) Int. Cl.: H02J 3/18

(54) **Method and system of demand control based on power factor**

(30) Priority: 18.08.2011 US 201113212629
(71) Applicant: General Electric Company, Schenectady, NY 12345 (US)
(72) Inventor: Ree, Bradley Richard, Atlanta, GA Georgia 30339 (US)
(74) Representative: Illingworth-Law, William Illingworth

(57) **Abstract**

Described herein are embodiments of methods and systems of demand control based on power factor. One embodiment of the method comprises receiving power factor information associated with a location in an electrical system and detecting a change in the power factor information associated with the location in the electrical system over time. The method further comprises sending a signal to one or more electrical apparatus (102) in response to the change in the power factor information. The signal causes a change in the operational characteristics of at least one of the one or more electrical apparatus (102) where the change in operational characteristics of the at least one of the one or more electrical apparatus (102) affects the power factor information associated with the location in the electrical system.

## Description

### BACKGROUND OF THE INVENTION

Generally, electricity utility suppliers install revenue meters capable of recording kilowatt demand, kilowatt-hours (kWh) and kilovolt-amp reactive hours (kVARh), among other electrical parameters, on customers' electric lines. Electrical power in Alternating Current (AC) has three components: real power (P = I²R), reactive power (Q = I²X), and apparent power (S = I²Z). Inductive loads, such as transformers, electric motors, and high intensity discharge lighting, cause low power factor. Power factor (PF) is the ratio of real power to apparent power, and represents how much real power electric equipment utilizes. Power Factor = W (real Power)/VA (Apparent Power). Power factor should not be confused with energy efficiency or conservation - improving the efficiency of electrical equipment reduces energy consumption, but may not improve power factor.

Inductive loads require the electrical current to produce a magnetic field, which produces the desired work. The total or apparent power required by an inductive device is the addition of real power, measured in Watts (W), and reactive power, which is the nonworking power resulting from the magnetizing current measured in Volt-Amps reactive (VAR). Apparent Power (VA) = Real Power (W) + Reactive Power (VAR). A "power triangle" can be used to illustrate the relationship between apparent, real, and reactive powers. Reactive power required by inductive loads increases apparent power, measured in Volt-Amps (VA), which causes the power factor to decrease. Low power factor causes power losses in the electric distribution system, which causes voltage drops. Low voltage can cause overheating and premature failure of motors and other inductive devices; some utilities charge a penalty for low power factor.

Low power factor requires a higher current draw, which leads to larger cables in the electrical distribution system. Higher currents lead to higher copper losses in cables and transformers. Therefore, utilities desire to operate their systems at a PF as close to 1.00 as possible. A reduction in kVARs reduces apparent power and increases power factor. Capacitors connected from line to neutral can provide reactive power to an AC circuit. When the capacitor provides reactive power, it mitigates or eliminates the need for the system to provide it. However, capacitors can be expensive to install and maintain, and may introduce resonance into the electrical system. kVARS can also be reduced (increasing power factor) by removing inductive loads from the electrical system or preventing such loads from coming on-line.

Therefore, systems and methods are desired that overcome challenges present in the art, some of which are described above.

### BRIEF DESCRIPTION OF THE INVENTION

Described herein are embodiments of methods and systems for demand control based on power factor.

One aspect comprises a method of demand control based on power factor. One embodiment of the method comprises receiving power factor information associated with a location in an electrical system and detecting a change in the power factor information associated with the location in the electrical system over time. The method further comprises sending a signal to one or more electrical apparatus in response to the change in the power factor information. The signal causes a change in the operational characteristics of at least one of the one or more electrical apparatus where the change in operational characteristics of the at least one of the one or more electrical apparatus affects the power factor information associated with the location in the electrical system.

Another embodiment of a method comprises receiving, via a network, a measurement of power factor associated with a location in an electrical system, wherein the measurement of power factor is obtained by a meter connected with the network. A change in the measurement of power factor associated with the location in the electrical system over time is detected by comparing, using a processor, a recently received power factor measurement associated with the location with a previously received power factor measurement associated with the location. In response to the change in the measured power factor, a signal is sent by the processor to one or more electrical apparatus wherein the signal causes a change in the operational characteristics of at least one of the one or more electrical apparatus. The change in operational characteristics of the at least one of the one or more electrical apparatus affects the measured power factor associated with the location in the electrical system.

In another aspect, a system is described. One embodiment of the system is comprised of a network interface operably connected with processor, wherein the processor is configured to: receive, using the network interface, power factor information associated with a location in an electrical system; detect a change in the power factor information associated with the location in the electrical system over time; and send, via the network interface, a signal to one or more electrical apparatus in response to the change in the power factor information, wherein the signal causes a change in the operational characteristics of at least one of the one or more electrical apparatus, the change in operational characteristics of the at least one of the one or more electrical apparatus affecting the power factor information associated with the location in the electrical system.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The accompanying drawings, which are incorporated in and constitute a part of this specification, illustrate embodiments and together with the description, serve to explain the principles of the methods and systems:
FIG. 1A is a single-line block diagram of a section of an exemplary utility distribution system;
FIG. 1B is an exemplary detailed illustration of a portion of a three-phase, four-wire (phases A, B, C and neutral, N) distribution system according to one embodiment of the present invention;
FIG. 2 illustrates an exemplary database structure wherein one or more electrical apparatus can be assigned a priority;
FIG. 3 illustrates an overview block diagram of a non-limiting embodiment of a meter that can be used to practice embodiments of the present invention;
FIG. 4 illustrates a block diagram of an entity capable of operating as meter electronics in accordance with one embodiment of the present invention;
FIG. 5 is a flowchart illustrating the operations that may be taken for demand control based on power factor according to an embodiment of the present invention; and
FIG. 6 is a block diagram illustrating an exemplary operating environment for performing the disclosed methods.

### DETAILED DESCRIPTION OF THE INVENTION

Before the present methods and systems are disclosed and described, it is to be understood that the methods and systems are not limited to specific synthetic methods, specific components, or to particular compositions. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers or steps. "Exemplary" means "an example of' and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the Examples included therein and to the Figures and their previous and following description.

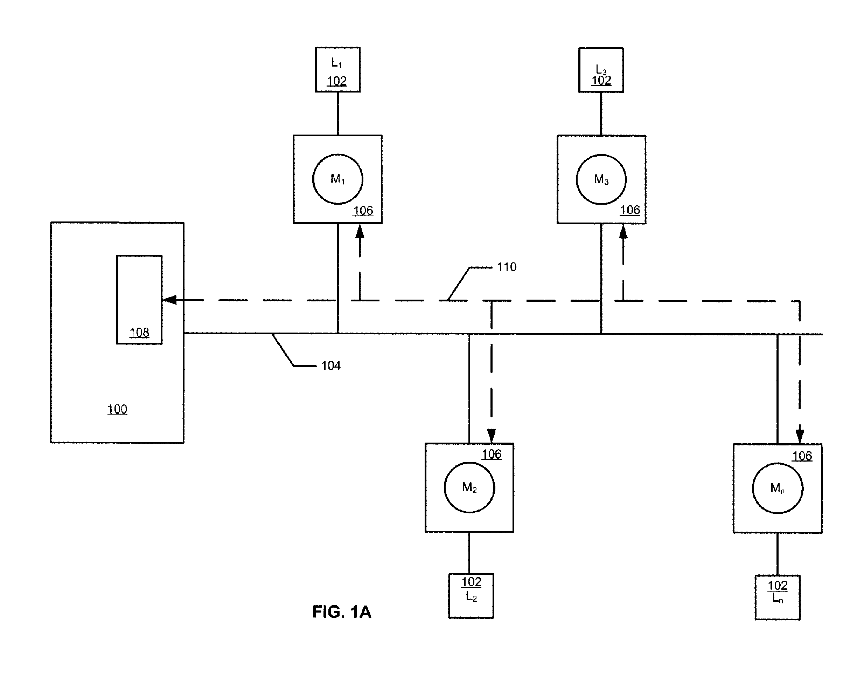

Referring to FIG. 1A, an illustration of one type of system that would benefit from embodiments of the present invention is provided. FIG. 1A is a single-line block diagram of a section of an exemplary utility distribution system such as, for example, an electric distribution system. As shown in FIG. 1A, a utility service is delivered by a utility provider 100 to various loads L₁-Lₙ 102 through a distribution system 104. In one aspect, the utility service provided can be electric power. Though shown in FIG. 1A as a single-line diagram, it is to be appreciated that the distribution system 104 can be comprised of single-phase and/or poly-phase components and be of varying voltage levels. Consumption and demand by the loads 102 can be measured at the load locations by revenue meters M₁-Mₙ 106. If an electric meter, the meters 106 can be single-phase or poly-phase electric meters, as known to one of ordinary skill in the art, depending upon the load 102. For example, the load can be single-phase and therefore the meter 106 can be single phase. Single-phase loads can be connected to different phases (e.g., phase A, phase B or phase C) of the distribution system 104. Similarly, for example, the load 102 can be a poly-phase load such as a three-phase load and the meter 106 can be a three-phase meter that meters the three phases serving the load 102.

In one aspect, the electric meter 106 is a smart meter as described herein and as known to one of ordinary skill in the art. Hereinafter, the specification will refer to the revenue meter 106 as a "meter," "electric meter," and/or "smart meter," where the terms can be used interchangeably. One non-limiting example of a smart meter is the GE I210+c meter as available from General Electric Company ("GE") (Schenectady, NY). Another non-limiting example of a smart meter is the GE SM3000 meter as also available from GE. While consumption or demand information is used by the utility provider 100 primarily for billing the consumer, it also can be used for other purposes including planning and profiling the utility distribution system. In some instances, utility providers 100 desire to electronically communicate with the meters 106 for numerous purposes including scheduling disconnection or connection of utility services to the loads 102, automatic meter reading (AMR), load shedding and load control, automatic distribution and smart-grid applications, outage reporting, providing additional services such as Internet, video, and audio, etc. As noted above, meters 106 can be configured to measure electrical parameters at the meter 106 location such as voltage, current, power factor, and the like. In many of these instances, the meters 106 can be configured to communicate with one or more computing devices 108 through a communications network 110, which can be wired (including fiber optic), wireless or a combination of wired and wireless, as known to one of ordinary skill in the art. In one aspect, the network 110 is an advanced metering infrastructure (AMI) network. AMI refers to systems that measure, collect and analyze energy usage, and interact with advanced devices such as electricity meters, gas meters, water meters, and the like through various communication media either on request (on-demand) or on pre-defined schedules. This infrastructure includes hardware, software, communications, consumer energy displays and controllers, customer associated systems, meter data management (MDM) software, supplier and network distribution business systems, and the like. The network 110 between the measurement devices (e.g., meters 106) and business systems allows collection and distribution of information to customers, suppliers, utility companies and service providers. This enables these businesses to either participate in, or provide, demand response solutions, products and services. By providing information to customers, the system assists a change in energy usage from their normal consumption patterns, either in response to changes in price or as incentives designed to encourage lower energy usage use at times of peak-demand periods or higher wholesale prices or during periods of low operational systems reliability. In one aspect, the network 110 comprises at least a portion of a smart grid network. In one aspect, the network 110 utilizes one or more of one or more of a WPAN (e.g., ZigBee, Bluetooth), LAN/WLAN (e.g., 802.11n, microwave, laser, etc.), WMAN (e.g., WiMAX, etc.), WAN/WWAN (e.g., UMTS, GPRS, EDGE, CDMA, GSM, CDPD, Mobitex, HSDPA, HSUPA, 3G, etc.), RS232, USB, Firewire, Ethernet, wireless USB, cellular, OpenHAN, power line carrier (PLC), broadband over power lines (BPL), and the like.

In some instances, the utility 100 desires to communicate with one or more electrical devices 102 at a metered location. In one aspect, the network 110 can be used by the utility to communicate with the one or more electrical devices 102. For example, a utility may desire to control operational characteristics of loads (e.g. electrical devices) 102 by use of a demand response management system (DRMS). An exemplary DRMS can be implemented through the use of dedicated control systems to shed loads in response to a request by a utility 100 or based upon market price conditions. Services (e.g., lights, machines, air conditioning, etc.) can be reduced according to a preplanned hierarchical load prioritization scheme during the critical time frames. Generally, a DRMS can control or affect the operational characteristics of one or more electrical devices 102 found at a metered location. Such electrical devices can include, for example, one or more of a heating, ventilation and air conditioning (HVAC) unit, a water heater, lighting, a dish washer, a refrigerator, a washing machine, a dryer, an electric stove or oven, a microwave oven, a water pump, and the like. In various instances, the utility 100 can communicate with the electrical devices 102 by use of network 110 that can comprise all or part of a DRMS, an AMI (as described herein), a smart-grid implementation, an Internet connection, or combinations thereof. The network 110 media can be wired (including fiber optic), wireless, or combinations thereof. In various aspects, the utility 100 can adjust operational characteristics of one or more electrical devices 100. For example, adjusting the one or more operational characteristics of the electrical device 102 can comprise causing the electrical device 102 to draw higher current or operate at a higher voltage than its normal operating state or can comprise causing the electrical device 102 to draw lower current or operate at a lower voltage than its normal operating state. In one aspect, adjusting the one or more operational characteristics of the electrical device 102 can comprise cycling the electrical device on and off. Such cycling can occur at a specified frequency. In one aspect, adjusting the one or more operational characteristics of the electrical device 102 comprises preventing the electrical device 102 from operating or being energized for a defined period of time. In one aspect, the network 110 communicates with a meter 106, such as a smart meter, which in turn communicates either wirelessly or through a wired connection with the one or more electrical devices at the metered location. In one aspect, a radio within the meter 106 communicates wirelessly with one or more devices. In one aspect, the meter 106 communicates with the one or more electrical devices using one or more of a WPAN (e.g., ZigBee, Bluetooth), LAN/WLAN (e.g., 802.11n, microwave, laser, etc.), WMAN (e.g., WiMAX, etc.), WAN/WWAN (e.g., UMTS, GPRS, EDGE, CDMA, GSM, CDPD, Mobitex, HSDPA, HSUPA, 3G, etc.), RS232, USB, Firewire, Ethernet, wireless USB, cellular, OpenHAN, power line carrier (PLC), broadband over power lines (BPL), and the like. In other instances, the network 110 can communicate directly with the one or more electrical devices using, for example, the Internet, cellular telephone, wired telephone connections, wired cable television connections, and the like.

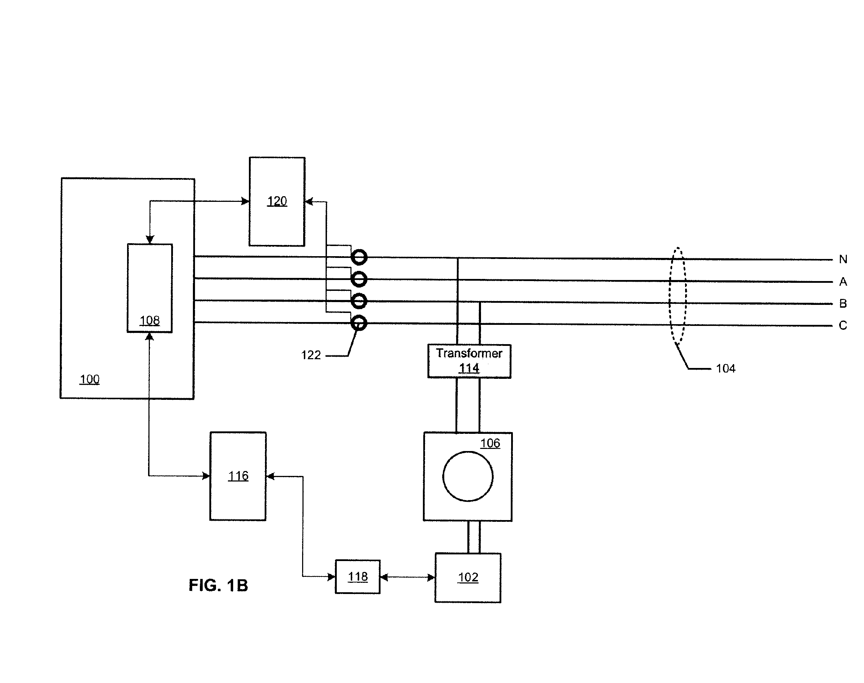

Referring now to FIG. 1B, in some instances an electrical distribution system 104 may be a poly-phase system such as a three-phase, four-wire network, which supplies power-using feeders. Each of the feeder lines then branches into multiple circuits to power a plurality of local pole-mounted or pad-mounted transformers 114, which step the voltage down to final voltages of, for example, 120 or 240 volts phase-to-ground or phase-to-phase for delivery and metering at metered commercial and residential customer locations. Generally, residential customers can be connected to any one phase of the three-phase system using a single-phase meter and commercial customers can be connected to all the three phases using three-phase meter with a load control relay ("LCR") connected on any one of the phases. Generally, a utility 100 desires to operate its system at a power factor as close to 1.00 as possible (all real power and no reactive power). Unfortunately, this is an ideal condition and not practical to maintain. Inductive loads, switching on and off on the system can cause the power factor to fluctuate. Such fluctuation can be better controlled if the utility controls inductive loads by switching them on or off or by preventing the inductive load from being turned on when the power factor is at a low level, thereby preventing the power factor from further decreasing. Such control of inductive loads can be controlled through a DRMS system, as described herein. FIG. 1B is an exemplary detailed illustration of a portion of a three-phase, four-wire (phases A, B, C and neutral, N) distribution system according to one embodiment of the present invention. As shown in FIG. 1B, distribution system 104 is comprised of three phase conductors (phases A, B and C) and a neutral (N) wire. In one aspect, each of three phases and the neutral are provided to each meter 106. In one aspect, the voltage provided at the meters 106 is stepped down by a transformer 114 to a level that can be used by the load 102 (e.g. 120/240, 277/480, and the like). The transformer 114 can be a single transformer, two or three single-phase transformers, or a single three-phase transformer, as needed to serve the load. FIG. 1B illustrates a single-phase load 102 served from phase B of the three-phase distribution system 104, though it is to be understood that embodiments of the present invention are equally applicable to poly-phase loads (and meters). As shown in FIG. 1B, an electrical device 102 has its operational characteristics adjusted through system 116. As noted above, adjusting the one or more operational characteristics of the electrical device 102 can comprise cycling the electrical device on and off wherein such cycling can occur at a specified frequency, or preventing the electrical device 102 from operating. Also, as noted herein, system 116 can comprise DRMS, an AMI, the Internet, combinations thereof and the like. Computing device 108, which is comprised of at least a processor and a network interface, can be configured to receive power factor information associated with a location in an electrical system 104; detect a change in the power factor information associated with the location in the electrical system 104 over time; and send a signal to one or more electrical apparatus 102 in response to the change in the power factor information, wherein the signal causes a change in the operational characteristics of at least one of the one or more electrical apparatus 102, the change in operational characteristics of the at least one of the one or more electrical apparatus affecting the power factor information associated with the location in the electrical system 104. In one aspect, the signal is transmitted from the computing device 108 to the system 116. The system 116, in turn, causes an adjustment in the operational characteristics of the electrical device 102. In one aspect, the system causes a control 118 associated with the electrical device 102 to adjust one or more operational characteristics of the electrical device 102. The control 118 can be, for example, a switch, relays, a rheostat, an adjustable voltage divider, a speed controller, and the like. In another aspect, the signal is transmitted from the computing device 108 to a meter 106 associated with the electrical device 102, and the meter 106 then transmits a signal (wirelessly or over a wired connection) to the electrical device 102 or to the control 118 associated with the electrical device 102 thereby causing an adjustment of the operational characteristics of the electrical device 102. In one aspect, the electrical device control 118 can cause the electrical device 102 to cycle on and off or to remain off in response to a change in the power factor at the location.

Further comprising the system shown in FIG. 1B is a monitoring system 120. Monitoring system 120 is comprised of at least one or more sensors 122, wherein the sensors 122 are configured to and capable of detecting a change in at least one electrical parameter of one or more phases of a poly-phase electrical system 104 that provides electrical energy to the electrical device 102. In one aspect, monitoring system 120 comprises all or a portion of a supervisory control and data acquisition (SCADA) system. In another aspect, monitoring system 120 comprises all or a portion of a distribution management system (DMS). In another aspect, monitoring system 120 is a combination of all or portions of a SCADA system and a DMS. In one aspect, monitoring system 120 has a separate computing device (e.g., a SCADA processor); while in other aspects monitoring system 120 makes use of computing device 108 (which can serve as a SCADA processor). Monitoring system 120 can detect changes in at least one electrical parameter of one or more phases of a poly-phase electrical system 104 that provides electrical energy to the electrical device 102. In various aspects, sensors 122 can detect changes in at least one of voltage, current, resistance, frequency, capacitance, inductance, power factor, real power, reactive power and the like of the one or more phases of the poly-phase electrical system 104 that provides electrical energy to the electrical device 102. In one aspect, monitoring system 120 can further analyze signals received from the sensors 122. For example, in one instance the monitoring system 120 can perform a fast-Fourier transform (FFT) of the sensor signals to detect the affected electrical parameters. In one aspect, such analysis can be performed on a processor such as SCADA processor or computing device 108 described herein. In other aspects, monitoring system 120 can perform other frequency- or time-domain analyses on the sensor signals.

Computing device 108 can receive from monitoring system 120 information about changes in at least one electrical parameter of one or more phases of the poly-phase electrical system 104 that provides electrical energy to the electrical device 102. For example, the monitoring system 108 can detect changes in the power factor of the electrical system 104 at or proximate to the location of the sensors 122. In response to the detected changes in power factor, computing device 108 can send a signal to one or more electrical apparatus 102 that causes a change in the operational characteristics of at least one of the one or more electrical apparatus 102. The change in operational characteristics of the at least one of the one or more electrical apparatus affects the power factor information associated with the location of the sensors 122 in the electrical system 102.

Therefore, as described herein, in one aspect computing device 108 can receive power factor information associated with a location in an electrical system 104 from a meter 106 proximate to the location and the power factor information comprises the power factor at or proximate to the meter's 106 location. In another aspect, computing device 108 can receive the power factor information from a supervisory control and data acquisition system (SCADA) or other system 120 associated with the electrical system 104 and the power factor information comprises the power factor at or proximate to the location in the electrical system 104 as determined by the other system 120. In either instance, computing device 108 receives power factor information related to a geographic region. In turn, computing device 08 can send a signal to one or more electrical apparatus 102 within or proximate to the geographic region to affect the operational characteristics of the electrical apparatus 102 thereby affecting power factor in the geographic region. For example, in one aspect the computing device 108 can receive power factor information associated with a location in an electrical system that comprises receiving a meter identifier that identifies the meter and the meter's location. In turn, the computing device 108 can send a signal to one or more electrical apparatus in response to the change in the power factor information comprising selecting the one or more apparatus based on their proximity to the meter's location.

In one aspect, the computing device 108 receiving power factor information associated with a location in an electrical system 104 comprises receiving the power factor information over an advanced metering infrastructure (AMI) network. In various embodiments, power factor information can be received continuously by the computing device 108, or receiving power factor information associated with a location in an electrical system 104 comprises intermittently receiving the power factor information. The computing device 108 detects changes in the power factor information. In one aspect, the computing device 108 detects a change in the power factor information associated with the location in the electrical system 104 over time by comparing recently received power factor information associated with the location with previously received power factor information associated with the location to detect the change. For example, a currently received power factor of .90 can be compared with a previous power factor of .92 to determine that power factor has decreased. In another aspect, detecting a change in the power factor information associated with the location in the electrical system over time comprises comparing recently received power factor information associated with the location with a normalized value of power factor information. In various aspect, the normalized power factor information is determined by one of a mathematical function applied to the power factor information associated with the location, by filtering the power factor information associated with the location, by determining a rolling average of power factor information associated with the location to detect the change, and the like. In one aspect, detecting a change in the power factor information associated with the location in the electrical system over time comprises detecting whether power factor at the location in the electrical system exceeds an upper threshold or falls below a lower threshold. For example, the computing device can detect if the power factor drops below 0.90, or if it goes above 0.98. Generally, computing device 108 detects a decrease or an increase in the power factor associated with the location in the electrical system 104 over time.

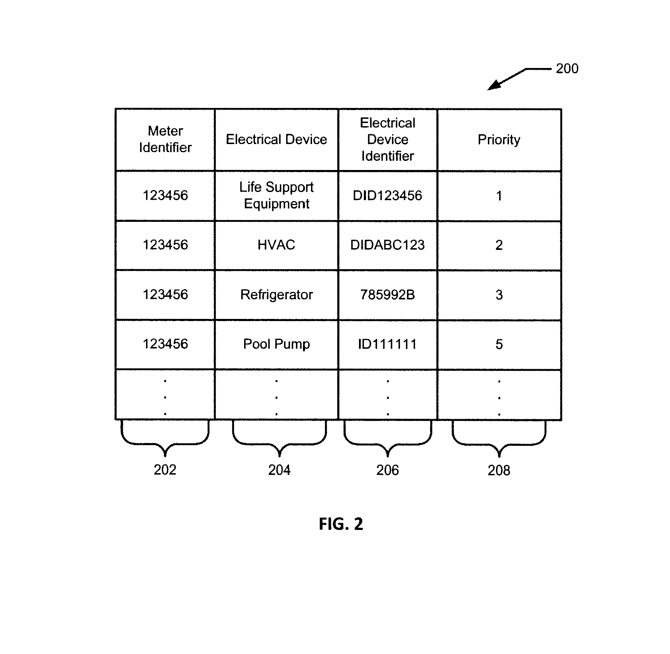

As noted herein, in response to the change in the power factor information, the computing device 108 sends a signal to at least one of the one or more electrical device 102. The signal causes a change in the operational characteristics of at least one of the one or more electrical apparatus 102 where the change in operational characteristics of the at least one of the one or more electrical apparatus 102 affects the power factor information associated with the location in the electrical system 104. For example, in one aspect, sending a signal to one or more electrical apparatus 102 in response to the change in the power factor information comprises sending a signal that causes at least one the one or more electrical apparatus 102 to shut off in response to a decrease in power factor. In one aspect, shutting off at least one of the one or more electrical apparatus 102 affects the power factor information associated with the location in the electrical system 104 by preventing the power factor at the location from further decreasing. Conversely, in another aspect, shutting off at least one of the one or more electrical apparatus affects 102 the power factor information associated with the location in the electrical system 104 by increasing the power factor. In another aspect, sending a signal to one or more electrical apparatus 102 in response to the change in the power factor information comprises sending a signal that causes at least one of the one or more electrical apparatus 102 to turn on in response to an increase or decrease in power factor. In yet another aspect, sending a signal to one or more electrical apparatus 102 in response to the change in the power factor information comprises sending a signal that prevents at least one of the one or more electrical apparatus 102 from turning on for a defined time period in response to a decrease or an increase in power factor. In one aspect, the computing device 108 sends the signals to the electrical apparatus 102 based upon a hierarchy, where electrical apparatus 102 having a lowest priority are selected first to receive the signal. For example, a customer may be more receptive to having a swimming pool pump motor shut off or prevented from coming on than he or she would be to having their HVAC turned off or prevented from coming on during a hot day. Therefore, the pool pump will have a lower priority than the HVAC system. The hierarchy can be established based upon customer preferences regarding which items to shut off or prevent from coming on first, second, third, etc. Shutting off or blocking electrical apparatus 102 can be implemented according to this hierarchy by the computing device 108 when a change in power factor is detected. The hierarchy of electrical apparatus for shutting off or blocking from operating when a change in power factor is detected can be stored in a database on a memory. Such a memory can be one associated with, for example, computing device 108. One exemplary embodiment of such a database 200 is shown in FIG. 2.

As shown in FIG. 2, one or more electrical apparatus 102 as described 204 have an identifier 206. For instance, the identifier 206 can be a MAC address for a home area network (HAN), or any other sort of identifier that allows the electrical apparatus 102 to be individually addressed. The database 200 further comprises a meter identifier 202 that is associated with the electrical apparatus 102. This field 202 may be optional if the computing device 108 can communicate directly with the electrical apparatus 102. If the computing device 108 must first communicate with the meter 106, and then the meter 106 communicates with the electrical apparatus 102, then the meter identifier 202 is required. The electrical apparatus 102 shown listed in FIG. 2 are prioritized 208 in order to form a hierarchy. Apparatus 102 identified with a priority 208 of "1" in FIG. 2 have the highest priority and will be the last apparatus to be shut off or blocked from operating, while apparatus 102 having a lower priority 208 (e.g., "2," "3," "5," etc.) will be shut off of blocked form operating before those apparatus 102 with a higher priority 208. For example, in FIG. 2 the first device 102 that would be shut off or blocked from operating would be the pool pump, which has a priority of "5." If shutting off the pool pump or preventing it from operating did not improve the power factor or cause the decrease in power factor to stop or decline, then the next apparatus 102 that would be shut off or blocked form operating would be the refrigerator, having a priority 208 of "3." This would continue until all enrolled apparatus 102 at or proximate to the location where power factor is being measured have been shut down or blocked from operating, or the power factor begins to improve or stop decreasing. In one aspect, the apparatus 102 may only be shut down or blocked from operating for a pre-determined period of time such as, for example, one hour, two hours, three hours, etc., or any time period therebetween. In one aspect, the pre-determined time period is agreed to beforehand between the utility 100 and the owner of the apparatus 102. Generally, the loads that are available for shut off or blocked operation are inductive loads so that shutting them off or blocking their operation will improve power factor. As noted herein, such loads can comprise, for example, one or more of a refrigerator, a freezer, a pump, and a heating, a ventilation and air-conditioning (HVAC) system, and the like. In one aspect, data included in the database 200 can be referred to as demand control data.

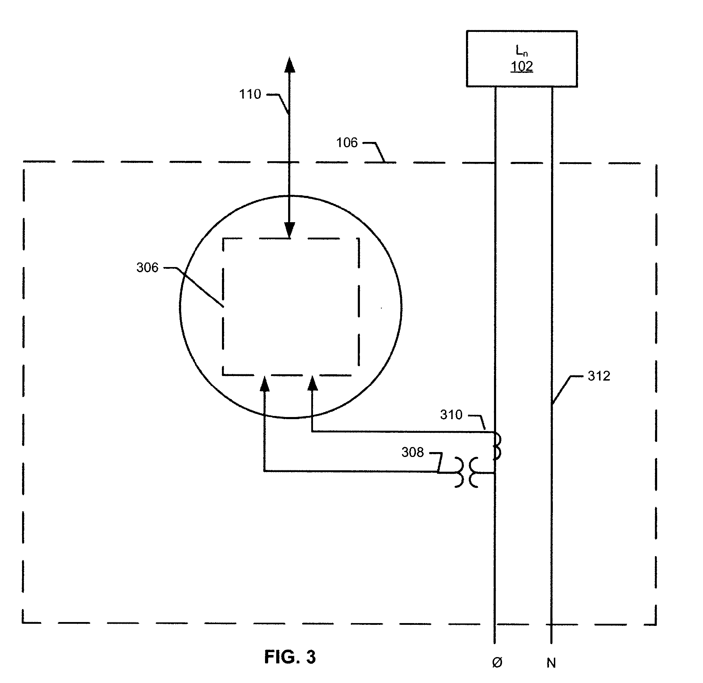

FIG. 3 illustrates an overview block diagram of a non-limiting embodiment of a meter 106 that can be used to practice embodiments of the present invention. In this exemplary embodiment, the utility service is single-phase electric power comprised of at least one phase conductor and a neutral conductor 312, though it is to be appreciated that the embodiments of the invention can be used with single- and poly-phase electrical systems such as two-phase, three-phase, four-phase, etc. Further comprising the embodiment of a meter 106 shown in FIG. 3 are meter's electronics 306. Analog voltage and current inputs are provided to meter electronics 306. In one aspect, the analog signals are derived from the electrical power feed serving the load 102 and the one being metered by the meter 106. In another aspect, the analog signals are derived from a separate electrical source. In one aspect, the analog voltage signal can be provided by one or more potential transformers (PT) 308, if needed, though other means such as a voltage divider, capacitive coupling, or the like can be used. If the voltage level of the source is sufficiently low (e.g., .25 volts AC, or lower), then a PT 308 or other means of stepping down or transforming the voltage can be omitted. Similarly, in one aspect, the analog current signal can be provided by one or more current transformers (CT) 310. In one aspect, the one or more CTs 310 can have a turns ratio of 1:2500. In one aspect, one or more resistors (not shown) can be used to convert the current signal from the CT 310 into a voltage signal. In one aspect, the PTs 308 and CTs 310 can be used by the meter's electronics to determine power factor at the meter's 106 location. Power factor can be determined continuously or intermittently. In one aspect, meter electronics 306 can compare a determined power factor with a previously determined power factor to detect any changes. If a change is detected, then meter electronics 306 can send a signal to computing device 108.

In one aspect, the meter electronics 306 can comprise a memory (not shown in FIG. 3). The memory can be used to store a device identifier that identifies one or more electrical apparatus that comprise the load 102 that can have their operational characteristics altered in accordance with a signal received by the meter electronics 306 over the network 110. In one aspect, the electrical apparatus can be shut down, started, or prevented from operating in accordance with the signal. For example, a signal can be sent to the meter 106 over a network 110. In one aspect, the network 110 is an advanced metering infrastructure (AMI) network. Further, memory can be used to store power factor information as determined at the location of the meter 106. Such power factor information can be transmitted over the network 110 to computing device 108.

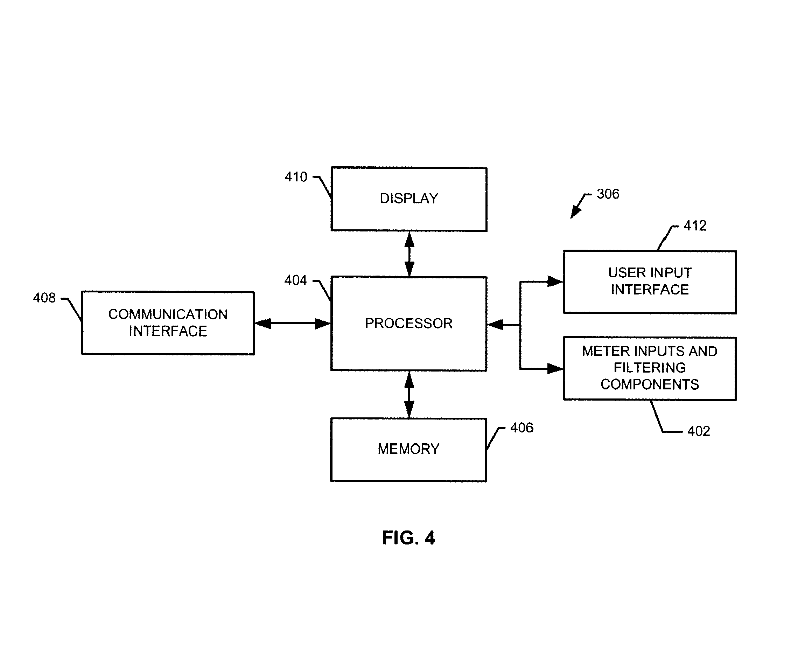

Referring now to FIG. 4, a block diagram of an entity capable of operating as meter electronics 306 is shown in accordance with one embodiment of the present invention. The entity capable of operating as meter electronics 306 includes various means for performing one or more functions in accordance with embodiments of the present invention, including those more particularly shown and described herein. It should be understood, however, that one or more of the entities may include alternative means for performing one or more like functions, without departing from the spirit and scope of the present invention. As shown, the entity capable of operating as meter electronics 306 can generally include means, such as one or more processors 404 for performing or controlling the various functions of the entity. As shown in FIG. 4, in one embodiment, meter electronics 306 can comprise metering components such as meter inputs and filtering components 402. In one aspect, the meter inputs and filter components 402 can comprise voltage and current inputs, one or more ADCs, filtering components, and the like. Further comprising this embodiment of meter electronics 306 are one or more processors 404 and memory 406.

In one embodiment, the one or more processors 404 are in communication with or include memory 406, such as volatile and/or non-volatile memory that stores content, data or the like. For example, the memory 406 may store content transmitted from, and/or received by, the entity. Also for example, the memory 406 may store software applications, instructions or the like for the one or more processors 404 to perform steps associated with operation of the entity in accordance with embodiments of the present invention. In one aspect, the meter electronics 306 comprise at least a memory 406 and one or more processors 404 and provide an interface 408 for receiving a signal from the network 110 and causing an electrical device control 118 to adjust the operational characteristics of one or more electrical devices 102. The memory 406 of the meter electronics 306 can be used to store a device identifier as described above. The meter electronics 306 can comprise a transmitter that can be used to transmit at least the power factor as determined at the meter location over the network 110 to a separate computing device 108. In one aspect, the meter's electronics 306 can comprise one or more metering micro-controllers including a Teridian 6533 controller or a Teridian 6521 controller as are available from Maxim Integrated Products, Inc. (Sunnyvale, California), among others. In one aspect, the one or more processors 404 can perform metering functions such as determining the number of kilowatt-hours (KWH) of electricity consumed by the load 102, kilovolt-amp reactive hours (kVARh), power factor, and the like.

In addition to the memory 406, the one or more processors 404 can also be connected to at least one interface or other means for displaying, transmitting and/or receiving data, content or the like. In this regard, the interface(s) can include at least one communication interface 408 or other means for transmitting and/or receiving data, content or the like, as well as at least one user interface that can include a display 410 and/or a user input interface 412. In one aspect, the communication interface 408 can be used to transfer power factor information stored in the memory 406 to a remote computing device 108 such as the one described herein over a network 110, or to receive a signal form the remote computing device 108. In one aspect, the network 110 is an advanced metering infrastructure (AMI) network. In one aspect, the communication interface 408 can further comprise a wireless communication interface such as a Wi-Fi transceiver or radio that can be used to communicate with electrical apparatus 102 at or proximate to the meter's 106 location. Likewise, the communication interface 408 can further comprise a wired communication interface that can be used to communicate with electrical apparatus 102 through a wired (or fiber optic) connection, including broadband over power line (BPL) or power line carrier (PLC). The user input interface 412, in turn, can comprise any of a number of devices allowing the entity to receive data from a user, such as a keypad, a touch display, a joystick or other input device.

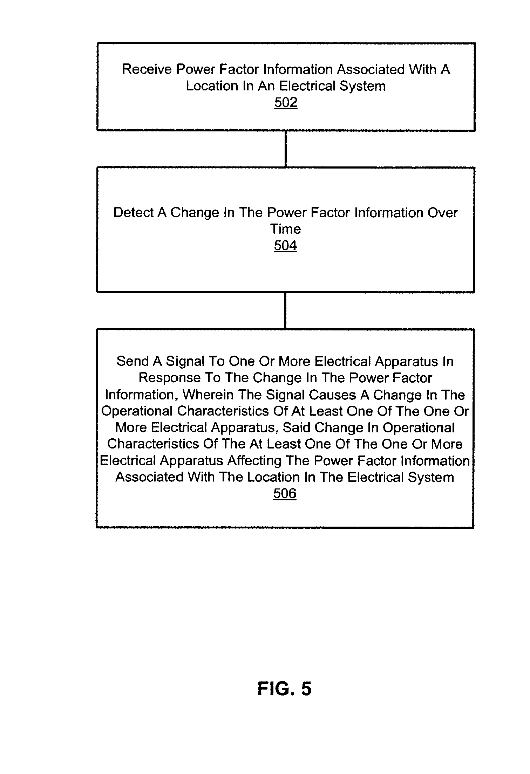

Referring now to FIG. 5, the operations are illustrated that may be taken for demand control based on power factor. At Step 502, power factor information is received. The power factor information is associated with a location in an electrical system. In one aspect, receiving power factor information associated with a location in an electrical system comprises receiving the power factor information from a meter proximate to the location and the power factor information comprises the power factor at or proximate to the meter's location. In another aspect, receiving power factor information associated with a location in an electrical system comprises receiving the power factor information from a supervisory control and data acquisition system (SCADA) associated with the electrical system and the power factor information comprises the power factor at the location in the electrical system as determined by the SCADA system. In one aspect, receiving power factor information associated with a location in an electrical system comprises receiving the power factor information aver an advanced metering infrastructure (AMI) network. In one aspect, receiving power factor information associated with a location in an electrical system comprises continuously receiving the power factor information, whereas in another aspect, receiving power factor information associated with a location in an electrical system comprises intermittently receiving the power factor information.

At Step 504, a change is detected in the power factor information over time. In one aspect, detecting a change in the power factor information associated with the location in the electrical system over time comprises comparing recently received power factor information associated with the location with previously received power factor information associated with the location to detect the change. In another aspect, detecting a change in the power factor information associated with the location in the electrical system over time comprises comparing recently received power factor information associated with the location with a normalized value of power factor information. In various aspects, the normalized power factor information is determined by one of a mathematical function applied to the power factor information associated with the location, by filtering the power factor information associated with the location, by determining a rolling average of power factor information associated with the location to detect the change, and the like. In one aspect, detecting a change in the power factor information associated with the location in the electrical system over time comprises detecting whether power factor at the location in the electrical system exceeds an upper threshold or falls below a lower threshold. Generally, computing device 108 detects a decrease or an increase in the power factor associated with the location in the electrical system 104 over time. In one aspect, detecting a change in the power factor information associated with the location in the electrical system over time comprises detecting a decrease in power factor at the location in the electrical system, whereas in another aspect, detecting a change in the power factor information associated with the location in the electrical system over time comprises detecting an increase in power factor at the location in the electrical system.

At Step 506, a signal is sent to one or more electrical apparatus in response to the change in the power factor information. The signal causes a change in the operational characteristics of at least one of the one or more electrical apparatus. The change in the operational characteristics of the at least one of the one or more electrical apparatus affects the power factor information associated with the location in the electrical system. In one aspect, sending a signal to one or more electrical apparatus in response to the change in the power factor information comprises sending the signal using a demand response management system (DRMS). In another aspect, sending a signal to one or more electrical apparatus in response to the change in the power factor information comprises sending the signal using an advanced metering infrastructure (AMI) network. In one aspect, sending a signal to one or more electrical apparatus in response to the change in the power factor information comprises sending the signal to one or more electrical apparatus based upon a hierarchy, where electrical apparatus having a lowest priority are selected first to receive the signal. In one aspect, sending a signal to one or more electrical apparatus in response to the change in the power factor information comprises sending the signal to one or more electrical apparatus that have an inductive load characteristic. In another aspect, sending a signal to one or more electrical apparatus in response to the change in the power factor information comprises sending the signal to one or more of a refrigerator, a freezer, a pump, a heating, and a ventilation and air-conditioning (HVAC) system, and the like. In one aspect, sending a signal to one or more electrical apparatus in response to the change in the power factor information comprises sending a signal that causes at least one the one or more electrical apparatus to shut off in response to a decrease in power factor. In one aspect, shutting off at least one of the one or more electrical apparatus affects the power factor information associated with the location in the electrical system by preventing the power factor at the location from further decreasing. In another aspect, shutting off at least one of the one or more electrical apparatus affects the power factor information associated with the location in the electrical system by increasing the power factor. In one aspect, sending a signal to one or more electrical apparatus in response to the change in the power factor information comprises sending a signal that causes at least one of the one or more electrical apparatus to turn on in response to an increase in power factor. In another aspect, sending a signal to one or more electrical apparatus in response to the change in the power factor information comprises sending a signal that prevents at least one of the one or more electrical apparatus from turning on for a defined time period in response to a decrease in power factor.

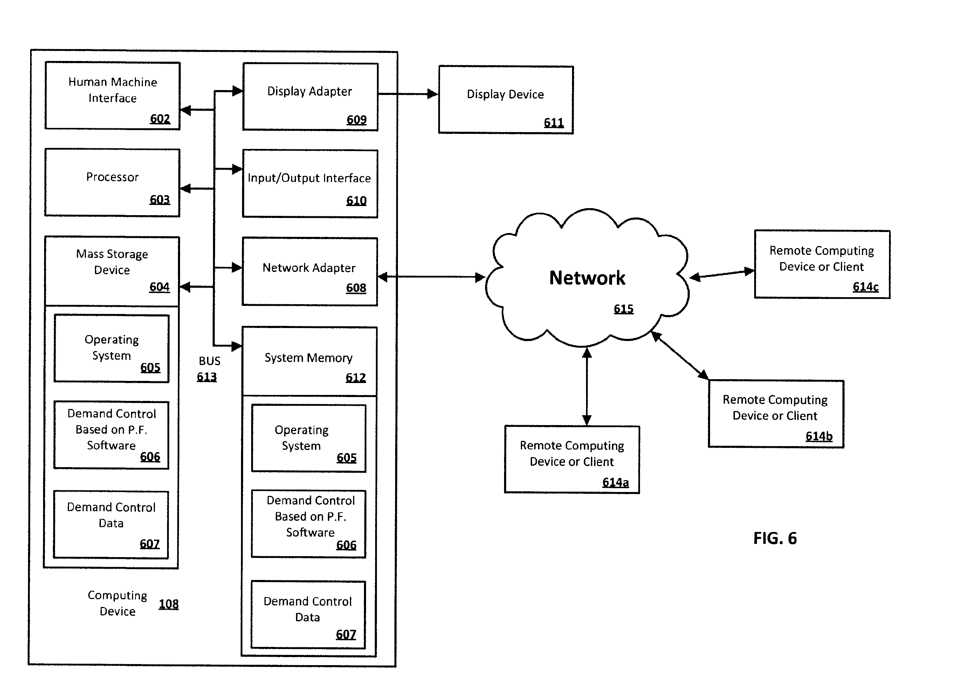

The above system has been described above as comprised of units. One skilled in the art will appreciate that this is a functional description and that software, hardware, or a combination of software and hardware can perform the respective functions. A unit, such as an electrical device, and electrical device control, a meter, a smart grid, a utility computing device, a vendor or manufacturer's computing device, etc., can be software, hardware, or a combination of software and hardware. The units can comprise the demand control based on power factor software 606 as illustrated in FIG. 6 and described below. In one exemplary aspect, the units can comprise a computing device 108 as referenced above and further described below.

FIG. 6 is a block diagram illustrating an exemplary operating environment for performing the disclosed methods. This exemplary operating environment is only an example of an operating environment and is not intended to suggest any limitation as to the scope of use or functionality of operating environment architecture. Neither should the operating environment be interpreted as having any dependency or requirement relating to any one or combination of components illustrated in the exemplary operating environment.

The present methods and systems can be operational with numerous other general purpose or special purpose computing system environments or configurations. Examples of well known computing systems, environments, and/or configurations that can be suitable for use with the systems and methods comprise, but are not limited to, personal computers, server computers, laptop devices, and multiprocessor systems. Additional examples comprise set top boxes, programmable consumer electronics, network PCs, minicomputers, mainframe computers, smart meters, smart-grid components, SCADA masters, distributed computing environments that comprise any of the above systems or devices, and the like.

The processing of the disclosed methods and systems can be performed by software components. The disclosed systems and methods can be described in the general context of computer-executable instructions, such as program modules, being executed by one or more computers or other devices. Generally, program modules comprise computer code, routines, programs, objects, components, data structures, etc. that perform particular tasks or implement particular abstract data types. The disclosed methods can also be practiced in grid-based and distributed computing environments where tasks are performed by remote processing devices that are linked through a communications network. In a distributed computing environment, program modules can be located in both local and remote computer storage media including memory storage devices.

Further, one skilled in the art will appreciate that the systems and methods disclosed herein can be implemented via a computing device 108. The components of the computing device 108 can comprise, but are not limited to, one or more processors or processing units 603, a system memory 612, and a system bus 613 that couples various system components including the processor 603 to the system memory 612. In the case of multiple processing units 603, the system can utilize parallel computing. In one aspect, the processor 603 is configured to send an actuation signal to cause an adjustment in the operational characteristics of an electrical device and receive information about changes in at least one electrical parameter of one or more phases of a poly-phase electrical system that provides electrical energy to the electrical device wherein the changes can be correlated with the adjustment of the one or more operational characteristics of the electrical device, thereby identifying the one or more phases of the poly-phase electrical system that provide electrical energy to the electrical device based upon the correlation of the changes in the at least one electrical parameter of the one or more phases of the poly-phase electrical system that provides electrical energy to the electrical device with the adjustment of the one or more operational characteristics of the electrical device.

The system bus 613 represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus 613, and all buses specified in this description can also be implemented over a wired or wireless network connection and each of the subsystems, including the processor 603, a mass storage device 604, an operating system 605, demand control based on power factor software 606, demand control data 607, a network adapter 608, system memory 612, an Input/Output Interface 610, a display adapter 609, a display device 611, and a human machine interface 602, can be contained within one or more remote computing devices or clients 614a,b,c at physically separate locations, connected through buses of this form, in effect implementing a fully distributed system or distributed architecture.

The computing device 108 typically comprises a variety of computer readable media. Exemplary readable media can be any available media that is non-transitory and accessible by the computing device 108 and comprises, for example and not meant to be limiting, both volatile and non-volatile media, removable and non-removable media. The system memory 612 comprises computer readable media in the form of volatile memory, such as random access memory (RAM), and/or non-volatile memory, such as read only memory (ROM). The system memory 612 typically contains data such as demand control data 607 and/or program modules such as operating system 605 and demand control based on power factor software 606 that are immediately accessible to and/or are presently operated on by the processing unit 603. In one aspect, the system memory 612 contains computer executable codes sections for performing the steps of receiving power factor information associated with a location in an electrical system; detecting a change in the power factor information associated with the location in the electrical system over time; and sending a signal to one or more electrical apparatus in response to the change in the power factor information, wherein the signal causes a change in the operational characteristics of at least one of the one or more electrical apparatus, the change in operational characteristics of the at least one of the one or more electrical apparatus affecting the power factor information associated with the location in the electrical system.

In another aspect, the computing device 108 can also comprise other non-transitory, removable/non-removable, volatile/non-volatile computer storage media. By way of example, FIG. 6 illustrates a mass storage device 604 that can provide non-volatile storage of computer code, computer readable instructions, data structures, program modules, and other data for the computing device 108. For example and not meant to be limiting, a mass storage device 604 can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device 604, including by way of example, an operating system 605 and demand control based on power factor software 606. Each of the operating system 605 and demand control based on power factor software 606 (or some combination thereof) can comprise elements of the programming and the demand control based on power factor software 606. Demand control data 607 can also be stored on the mass storage device 604. Demand control data 607 can be stored in any of one or more databases known in the art. Examples of such databases comprise, DB2® (IBM Corporation, Armonk, NY), Microsoft® Access, Microsoft® SQL Server, (Microsoft Corporation, Bellevue, Washington), Oracle®, (Oracle Corporation, Redwood Shores, California), mySQL, PostgreSQL, and the like. The databases can be centralized or distributed across multiple systems.

In another aspect, the user can enter commands and information into the computing device 108 via an input device (not shown). Examples of such input devices comprise, but are not limited to, a keyboard, pointing device (e.g., a "mouse"), a microphone, a joystick, a scanner, tactile input devices such as gloves, and other body coverings, and the like These and other input devices can be connected to the processing unit 603 via a human machine interface 602 that is coupled to the system bus 613, but can be connected by other interface and bus structures, such as a parallel port, game port, an IEEE 1394 Port (also known as a Firewire port), a serial port, or a universal serial bus (USB).

In yet another aspect, a display device 611 can also be connected to the system bus 613 via an interface, such as a display adapter 609. It is contemplated that the computing device 108 can have more than one display adapter 609 and the computing device 108 can have more than one display device 611. For example, a display device can be a monitor, an LCD (Liquid Crystal Display), or a projector. In addition to the display device 611, other output peripheral devices can comprise components such as speakers (not shown) and a printer (not shown), which can be connected to the computer 108 via Input/Output Interface 610. Any step and/or result of the methods can be output in any form to an output device. Such output can be any form of visual representation, including, but not limited to, textual, graphical, animation, audio, tactile, and the like.

The computing device 108 can operate in a networked environment using logical connections to one or more remote computing devices or clients 614a,b,c. By way of example, a remote computing device 614 can be a personal computer, portable computer, a server, a router, a network computer, a smart meter, a vendor or manufacture's computing device, smart grid components, a SCADA master, a DRMS processor, a DMS processor, a peer device or other common network node, and so on. Logical connections between the computing device 108 and a remote computing device or client 614a,b,c can be made via a local area network (LAN) and a general wide area network (WAN). Such network connections can be through a network adapter 608. A network adapter 608 can be implemented in both wired and wireless environments. Such networking environments are conventional and commonplace in offices, enterprise-wide computer networks, intranets, and other networks 615 such as the Internet or an AMI network.

For purposes of illustration, application programs and other executable program components such as the operating system 605 are illustrated herein as discrete blocks, although it is recognized that such programs and components reside at various times in different storage components of the computing device 108, and are executed by the data processor(s) of the computer. An implementation of demand control based on power factor software 606 can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" comprise volatile and non-volatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

The methods and systems can employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

As described above and as will be appreciated by one skilled in the art, embodiments of the present invention may be configured as a system, method, or computer program product. Accordingly, embodiments of the present invention may be comprised of various means including entirely of hardware, entirely of software, or any combination of software and hardware. Furthermore, embodiments of the present invention may take the form of a computer program product on a computer-readable storage medium having computer-readable program instructions (e.g., computer software) embodied in the storage medium. Any suitable non-transitory computer-readable storage medium may be utilized including hard disks, CD-ROMs, optical storage devices, or magnetic storage devices.

Embodiments of the present invention have been described above with reference to block diagrams and flowchart illustrations of methods, apparatuses (i.e., systems) and computer program products. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus, such as the one or more processors 603 discussed above with reference to FIG. 6 or the one or more processors 404 of FIG. 4, to produce a machine, such that the instructions which execute on the computer or other programmable data processing apparatus create a means for implementing the functions specified in the flowchart block or blocks.

These computer program instructions may also be stored in a computer-readable memory that can direct a computer or other programmable data processing apparatus (e.g., one or more processors 603 of FIG. 6 or the one or more processors 404 of FIG. 4) to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

Throughout this application, various publications may be referenced. The disclosures of these publications in their entireties are hereby incorporated by reference into this application in order to more fully describe the state of the art to which the methods and systems pertain.

Many modifications and other embodiments of the inventions set forth herein will come to mind to one skilled in the art to which these embodiments of the invention pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

Various aspects and embodiments of the present invention are defined by the following numbered clauses:
1. A method comprising:
   receiving power factor information associated with a location in an electrical system;
   detecting a change in the power factor information associated with the location in the electrical system over time; and
   sending a signal to one or more electrical apparatus in response to the change in the power factor information, wherein the signal causes a change in the operational characteristics of at least one of the one or more electrical apparatus, said change in operational characteristics of the at least one of the one or more electrical apparatus affecting the power factor information associated with the location in the electrical system.
2. The method of Clause 1, wherein receiving power factor information associated with a location in an electrical system comprises receiving the power factor information from a meter proximate to the location and the power factor information comprises the power factor at the meter's location.
3. The method of Clause 1 or Clause 2, wherein receiving power factor information associated with a location in an electrical system comprises receiving a meter identifier that identifies the meter and the meter's location.
4. The method of any preceding Clause, wherein sending a signal to one or more electrical apparatus in response to the change in the power factor information comprises selecting the one or more apparatus based on their proximity to the meter's location.
5. The method of any preceding Clause, wherein receiving power factor information associated with a location in an electrical system comprises receiving the power factor information from a supervisory control and data acquisition system (SCADA) associated with the electrical system and the power factor information comprises the power factor at the location in the electrical system as determined by the SCADA system.
6. The method of any preceding Clause, wherein receiving power factor information associated with a location in an electrical system comprises receiving the power factor information aver an advanced metering infrastructure (AMI) network.
7. The method of any preceding Clause, wherein receiving power factor information associated with a location in an electrical system comprises continuously receiving the power factor information.
8. The method of any preceding Clause, wherein receiving power factor information associated with a location in an electrical system comprises intermittently receiving the power factor information.
9. The method of any preceding Clause, wherein detecting a change in the power factor information associated with the location in the electrical system over time comprises comparing recently received power factor information associated with the location with previously received power factor information associated with the location to detect the change.
10. The method of any preceding Clause, wherein detecting a change in the power factor information associated with the location in the electrical system over time comprises comparing recently received power factor information associated with the location with a normalized power factor information associated with the location to detect the change.
11. The method of any preceding Clause, wherein the normalized power factor is determined by one of a mathematical function applied to the power factor information associated with the location or by filtering the power factor information associated with the location.
12. The method of any preceding Clause, wherein detecting a change in the power factor information associated with the location in the electrical system over time comprises detecting a decrease in power factor at the location in the electrical system.
13. The method of any preceding Clause, wherein detecting a change in the power factor information associated with the location in the electrical system over time comprises detecting an increase in power factor at the location in the electrical system.
14. The method of any preceding Clause, wherein detecting a change in the power factor information associated with the location in the electrical system over time comprises detecting whether power factor at the location in the electrical system exceeds an upper threshold or falls below a lower threshold.
15. The method of any preceding Clause, wherein sending a signal to one or more electrical apparatus in response to the change in the power factor information comprises sending the signal using a demand response management system (DRMS).
16. The method of any preceding Clause, wherein sending a signal to one or more electrical apparatus in response to the change in the power factor information comprises sending the signal using a home area network (HAN).
17. The method of any preceding Clause, wherein sending a signal to one or more electrical apparatus in response to the change in the power factor information comprises sending the signal using an advanced metering infrastructure (AMI) network.
18. The method of any preceding Clause, wherein sending a signal to one or more electrical apparatus in response to the change in the power factor information comprises sending the signal to one or more electrical apparatus based upon a hierarchy, where electrical apparatus having a lowest priority are selected first to receive the signal.
19. The method of any preceding Clause, wherein sending a signal to one or more electrical apparatus in response to the change in the power factor information comprises sending the signal to one or more electrical apparatus that have an inductive load characteristic.
20. The method of any preceding Clause, wherein sending a signal to one or more electrical apparatus in response to the change in the power factor information comprises sending the signal to one or more of a refrigerator, a freezer, a pump, and a heating, and a ventilation and air-conditioning (HVAC) system.
21. The method of any preceding Clause, wherein sending a signal to one or more electrical apparatus in response to the change in the power factor information, wherein the signal causes a change in the operational characteristics of at least one of the one or more electrical apparatus, said change in operational characteristics of the at least one of the one or more electrical apparatus affecting the power factor information associated with the location in the electrical system comprises sending a signal that causes at least one the one or more electrical apparatus to shut off in response to a decrease in power factor.
22. The method of any preceding Clause, wherein shutting off at least one of the one or more electrical apparatus affects the power factor information associated with the location in the electrical system by preventing the power factor at the location from further decreasing.
23. The method of any preceding Clause, wherein shutting off at least one of the one or more electrical apparatus affects the power factor information associated with the location in the electrical system by increasing the power factor.
24. The method of any preceding Clause, wherein sending a signal to one or more electrical apparatus in response to the change in the power factor information, wherein the signal causes a change in the operational characteristics of at least one of the one or more electrical apparatus, said change in operational characteristics of the at least one of the one or more electrical apparatus affecting the power factor information associated with the location in the electrical system comprises sending a signal that causes at least one of the one or more electrical apparatus to turn on in response to an increase in power factor.
25. The method of any preceding Clause, wherein sending a signal to one or more electrical apparatus in response to the change in the power factor information, wherein the signal causes a change in the operational characteristics of at least one of the one or more electrical apparatus, said change in operational characteristics of the at least one of the one or more electrical apparatus affecting the power factor information associated with the location in the electrical system comprises sending a signal that prevents at least one of the one or more electrical apparatus from turning on for a defined time period in response to a decrease in power factor.
26. A method comprising:
   receiving, via a network, a measurement of power factor associated with a location in an electrical system, wherein the measurement of power factor is obtained by a meter connected with the network;
   detecting, using a processor, a change in the measurement of power factor associated with the location in the electrical system over time by comparing a recently received power factor measurement associated with the location with a previously received power factor measurement associated with the location or by comparing the recently received power factor measurement associated with a threshold power factor value; and
   sending, by the processor, a signal to one or more electrical apparatus in response to the change in the measured power factor, wherein the signal causes a change in the operational characteristics of at least one of the one or more electrical apparatus, said change in operational characteristics of the at least one of the one or more electrical apparatus affecting the measured power factor associated with the location in the electrical system.
27. The method of any preceding Clause, wherein receiving the power factor measurement associated with the location in the electrical system comprises receiving the power factor measurement over an advanced metering infrastructure (AMI) network.
28. The method of any preceding Clause, wherein sending a signal to one or more electrical apparatus in response to the change in the power factor information comprises sending the signal using a demand response management system (DRMS).
29. The method of any preceding Clause, wherein sending a signal to one or more electrical apparatus in response to the change in the power factor information comprises sending the signal using a home area network (HAN).
30. The method of any preceding Clause, wherein sending a signal to one or more electrical apparatus in response to the change in the measured power factor comprises sending the signal to at least one of the one or more electrical apparatus based upon a hierarchy, where electrical apparatus having a lowest priority are selected first to receive the signal.
31. The method of any preceding Clause, wherein sending a signal to one or more electrical apparatus in response to the change in the measured power factor comprises sending the signal to one or more electrical apparatus that have an inductive load characteristic.
32. The method of any preceding Clause, wherein sending a signal to one or more electrical apparatus in response to the change in the measured power factor, wherein the signal causes a change in the operational characteristics of at least one of the one or more electrical apparatus, said change in operational characteristics of the at least one of the one or more electrical apparatus affecting the measured power factor associated with the location in the electrical system comprises sending a signal that causes at least one of the one or more electrical apparatus to shut off in response to a decrease in power factor.
33. The method of any preceding Clause, wherein sending a signal to one or more electrical apparatus in response to the change in the measured power factor, wherein the signal causes a change in the operational characteristics of at least one of the one or more electrical apparatus, said change in operational characteristics of the at least one of the one or more electrical apparatus affecting the measured power factor associated with the location in the electrical system comprises sending a signal that causes at least one of the one or more electrical apparatus to turn on in response to an increase in power factor.
34. The method of any preceding Clause, wherein sending a signal to one or more electrical apparatus in response to the change in the measured power factor, wherein the signal causes a change in the operational characteristics of at least one of the one or more electrical apparatus, said change in operational characteristics of the at least one of the one or more electrical apparatus affecting the measured power factor associated with the location in the electrical system comprises sending a signal that prevents at least one of the one or more electrical apparatus from turning on for a defined time period in response to a decrease in power factor.
35. A system comprised of:
   a network interface; and
   a processor operably connected with the network interface, wherein the processor is configured to:
      receive, using the network interface, power factor information associated with a location in an electrical system;
      detect a change in the power factor information associated with the location in the electrical system over time; and
      send, via the network interface, a signal to one or more electrical apparatus in response to the change in the power factor information, wherein the signal causes a change in the operational characteristics of at least one of the one or more electrical apparatus, said change in operational characteristics of the at least one of the one or more electrical apparatus affecting the power factor information associated with the location in the electrical system.
36. The system of any preceding Clause further comprising a meter, wherein receiving power factor information associated with a location in an electrical system comprises receiving the power factor information from the meter proximate to the location and the power factor information comprises the power factor at the meter's location.
37. The system of any preceding Clause, wherein receiving power factor information associated with a location in an electrical system comprises receiving the power factor information associated with a geographic region of the electrical system and the signal is sent to a plurality of electrical devices located within the geographic region.
38. The system of any preceding Clause further comprising a supervisory control and data acquisition (SCADA) system associated with the electrical system, wherein receiving power factor information associated with a location in an electrical system comprises receiving the power factor information from the SCADA system and the power factor information comprises the power factor at the location in the electrical system as determined by the SCADA system.
39. The system of any preceding Clause, wherein the network interface interfaces with an advanced metering infrastructure (AMI) network, and receiving power factor information associated with a location in an electrical system comprises receiving the power factor information over the AMI network.
40. The system of any preceding Clause, wherein the processor is configured to continuously receive power factor information associated with the location in the electrical system.
41. The system of any preceding Clause, wherein the processor is configured to intermittently receive power factor information associated with the location in the electrical system.
42. The system of any preceding Clause, wherein the processor is configured to detect a change in the power factor information associated with the location in the electrical system over time by comparing recently received power factor information associated with the location with previously received power factor information associated with the location to detect the change or by comparing the recently received power factor measurement associated with a threshold power factor value.
43. The system of any preceding Clause, wherein the processor is configured to detect a change in the power factor information associated with the location in the electrical system over time by comparing recently received power factor information associated with the location with normalized power factor information associated with the location to detect the change.
44. The method of any preceding Clause, wherein the normalized power factor information is determined by one of a mathematical function applied to the power factor information associated with the location or by filtering the power factor information associated with the location.
45. The system of any preceding Clause, wherein the processor is configured to detect a change in the power factor information associated with the location in the electrical system over time by detecting a decrease in power factor at the location in the electrical system.
46. The system of any preceding Clause, wherein the processor is configured to detect a change in the power factor information associated with the location in the electrical system over time by detecting an increase in power factor at the location in the electrical system.
47. The system of any preceding Clause further comprising a demand response management system (DRMS), wherein sending a signal to one or more electrical apparatus in response to the change in the power factor information comprises sending the signal using the DRMS.
48. The system of any preceding Clause further comprising a home area network (HAN), wherein sending a signal to one or more electrical apparatus in response to the change in the power factor information comprises sending the signal using the HAN.
49. The system of any preceding Clause further comprising an advanced metering infrastructure (AMI) network, wherein sending a signal to one or more electrical apparatus in response to the change in the power factor information comprises sending the signal using the AMI network.
50. The system of any preceding Clause further comprising a database stored on a memory and the memory is operably connected with the processor, wherein the database comprises an identifier and a hierarchy for the one or more electrical apparatus and the processor is configured to send the signal to the one or more electrical apparatus based upon the hierarchy, where electrical apparatus having a lowest priority in the hierarchy are selected first to receive the signal.
51. The system of any preceding Clause, wherein the one or more electrical apparatus comprise one or more electrical apparatus that have an inductive load characteristic.
52. The system of any preceding Clause, wherein the one or more electrical apparatus comprise one or more of a refrigerator, a freezer, a pump, and a heating, and a ventilation and air-conditioning (HVAC) system.
53. The system of any preceding Clause, wherein the signal causes at least one of the one or more electrical apparatus to shut off in response to a decrease in power factor.
54. The system of any preceding Clause, wherein shutting off at least one of the one or more electrical apparatus affects the power factor information associated with the location in the electrical system by preventing the power factor at the location from further decreasing.
55. The system of any preceding Clause, wherein shutting off at least one of the one or more electrical apparatus affects the power factor information associated with the location in the electrical system by increasing the power factor.
56. The system of any preceding Clause, wherein the signal causes at least one of the one or more electrical apparatus to turn on in response to an increase in power factor.
57. The system of any preceding Clause, wherein the signal prevents at least one of the one or more electrical apparatus from turning on for a defined time period in response to a decrease in power factor.

## Claims

1. A method comprising:
receiving, via a network (110), a measurement of power factor associated with a location in an electrical system , wherein the measurement of power factor is obtained by a meter (106) connected with the network (110);
detecting, using a processor (603), a change in the measurement of power factor associated with the location in the electrical system over time by comparing a recently received power factor measurement associated with the location with a previously received power factor measurement associated with the location or by comparing the recently received power factor measurement associated with the location with a threshold power factor value; and
sending, by the processor (603), a signal to one or more electrical apparatus (102) in response to the change in the measured power factor, wherein the signal causes a change in the operational characteristics of at least one of the one or more electrical apparatus (102), said change in operational characteristics of the at least one of the one or more electrical apparatus (102) affecting the measured power factor associated with the location in the electrical system.

2. The method of Claim 1, wherein sending a signal to one or more electrical apparatus (102) in response to the change in the measured power factor comprises sending the signal to at least one of the one or more electrical apparatus (102) based upon a hierarchy, where electrical apparatus (102) having a lowest priority are selected first to receive the signal.

3. The method of Claim 1 or Claim 2, wherein sending a signal to one or more electrical apparatus (102) in response to the change in the measured power factor, wherein the signal causes a change in the operational characteristics of at least one of the one or more electrical apparatus (102), said change in operational characteristics of the at least one of the one or more electrical apparatus (102) affecting the measured power factor associated with the location in the electrical system comprises sending a signal that causes at least one of the one or more electrical apparatus (102) to shut off in response to a decrease in power factor or sending a signal that causes at least one of the one or more electrical apparatus (102) to turn on in response to an increase in power factor.

4. A system comprised of:
a network interface (608); and
a processor (603) operably connected with the network interface (608), wherein the processor (603) is configured to:
receive, using the network interface (608), power factor information associated with a location in an electrical system;
detect a change in the power factor information associated with the location in the electrical system over time; and
send, via the network interface (608), a signal to one or more electrical apparatus (102) in response to the change in the power factor information, wherein the signal causes a change in the operational characteristics of at least one of the one or more electrical apparatus (102), said change in operational characteristics of the at least one of the one or more electrical apparatus (102) affecting the power factor information associated with the location in the electrical system.

5. The system of Claim 4, wherein the network interface (608) interfaces with an advanced metering infrastructure (AMI) network, and receiving power factor information associated with a location in an electrical system comprises receiving the power factor information over the AMI network.

6. The system of Claim 4 or Claim 5, wherein the processor (603) is configured to detect a change in the power factor information associated with the location in the electrical system over time by comparing recently received power factor information associated with the location with previously received power factor information associated with the location to detect the change or by comparing the recently received power factor measurement associated with the location with a threshold power factor value.

7. The system of any of Claims 4 to 6, further comprising a demand response management system (DRMS), wherein sending a signal to one or more electrical apparatus (102) in response to the change in the power factor information comprises sending the signal using the DRMS.

8. The system of any Claims 4 to 7, further comprising a home area network (HAN), wherein sending a signal to one or more electrical apparatus (102) in response to the change in the power factor information comprises sending the signal using the HAN.

9. The system of any of Claims 4 to 8, further comprising a database (200) stored on a memory (612) and the memory (612) is operably connected with the processor (603), wherein the database (200) comprises an identifier (206) and a hierarchy for the one or more electrical apparatus (102) and the processor (603) is configured to send the signal to the one or more electrical apparatus (102) based upon the hierarchy, where electrical apparatus (102) having a lowest priority (208) in the hierarchy are selected first to receive the signal.

10. The system of any of Claims 4 to 9, wherein the one or more electrical apparatus (102) comprise one or more of a refrigerator, a freezer, a pump, and a heating, and a ventilation and air-conditioning (HVAC) system.

11. A method comprising:
receiving power factor information associated with a location in an electrical system;
detecting a change in the power factor information associated with the location in the electrical system over time; and
sending a signal to one or more electrical apparatus in response to the change in the power factor information, wherein the signal causes a change in the operational characteristics of at least one of the one or more electrical apparatus, said change in operational characteristics of the at least one of the one or more electrical apparatus affecting the power factor information associated with the location in the electrical system.

12. The method of Claim 11, wherein receiving power factor information associated with a location in an electrical system comprises receiving the power factor information from a meter proximate to the location and the power factor information comprises the power factor at the meter's location.

13. The method of Claim 11 or Claim 12, wherein receiving power factor information associated with a location in an electrical system comprises receiving a meter identifier that identifies the meter and the meter's location.

14. The method of any of Claims 11 to 13, wherein sending a signal to one or more electrical apparatus in response to the change in the power factor information comprises selecting the one or more apparatus based on their proximity to the meter's location.

15. The method of any of Claims 11 to 14, wherein receiving power factor information associated with a location in an electrical system comprises receiving the power factor information from a supervisory control and data acquisition system (SCADA) associated with the electrical system and the power factor information comprises the power factor at the location in the electrical system as determined by the SCADA system.
